# EUROPEAN PATENT APPLICATION

(11) **EP 2 319 820 A1**
(43) Date of publication of application: **11.05.2011**
(21) Application number: 10251898.2
(22) Date of filing: 04.11.2010
(51) Int. Cl.: C05D 9/02, C05D 9/00, C05F 5/00, C05D 1/00

(54) **A plant nutrient obtained from the rice husk and a process of preparation thereof**

(30) Priority: 04.11.2009 IN CH10252009; 27.09.2010 IN CH28432010
(71) Applicant: Bijam Biosciences Private Limited, Hyderabad 500082 (IN)
(72) Inventor: Prasad, Durga Yandapalli, Dist. Andhra Pradesh 501202 (IN)
(74) Representative: Srinivasan, Ravi Chandran

(57) **Abstract**

The present invention relates to a plant nutrient comprising an extract of rice husk having dissolved silica 5 to 20 % and a process for obtaining the same, wherein the alkali treatment with rice husk is affected with and /or adding hydrogen peroxide to the reaction mixture, resulting rice agropolymer with low silica.

## Description

### FIELD OF INVENTION

The present invention generally relates to the field of agricultural biotechnology. In particular, this invention pertains to an efficient plant nutrient and a method of manufacturing the same from plant parts such as seed coats, hulls, husks or seed covers of plants including agricultural crops. More particular invention pertains to method of obtaining of bio silica from rice, because the said bio silica has potential for utilization as plant nutrient and also to produce high purity silicon for use in solar cells. The agro polymers disclosed herein have extensive industrial application and may be useful in purifying water of aqueous solutions polluted or contaminated by metal or ions.

### BACKGROUND AND PRIOR ART OF THE INVENTION

The agro polymer disclosed in the US patent 6958232 provides biopolymers with metal binding reactive sites, wherein the silica is in higher content as the preparation method is not aimed to alter the silica content. It is known that mostly silica is produced from white ash obtained by burning rice husk. Whereas present research is aimed to produce bio silica from rice husk without burning the same. Thus, the present invention is aimed at producing agropolymers, which derive from inexpensive, widely available plant materials, preferably raw agricultural materials, such as seed coats, hulls, husks, or seed covers of agricultural crops.

Therefore, the method disclosed in the present invention is different from the US patent 6958232, that the present method provide agropolymer very low silica content.

### OBJECTIVES OF THE PRESENT INVENTION

The primary objective of the present invention is to provide a plant nutrient from the rice husk without firing the rice husk.

Another objective of the present invention is to provide a plant nutrient from rice husk having rich content of dissolved silica (biosilica) of 5 to 20%

Yet another objective of the present invention is to provide a plant nutrient for foliar application, soil treatment.

Yet another objective of the present invention is to provide an agropolymers of rice husk embedded with rich content of silica in the range of 10 to 45 %.

Yet another objective of the present invention is to provide an agropolymers having application as a binding material with resin and use for ground filling to prevent ground water and soil pollution from industrial or toxic metals pollutants.

### BRIEF DESCRIPTION OF FIGURE

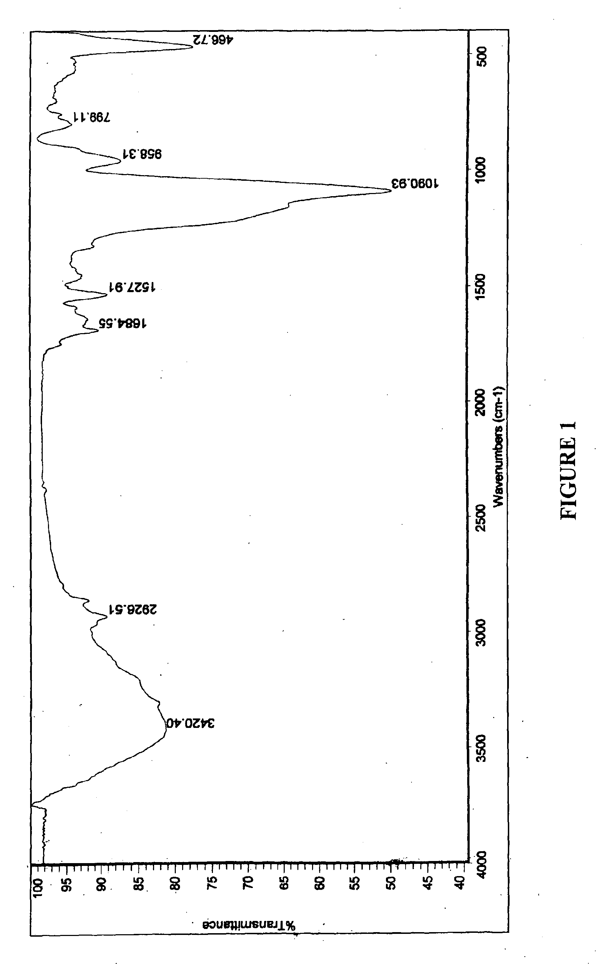

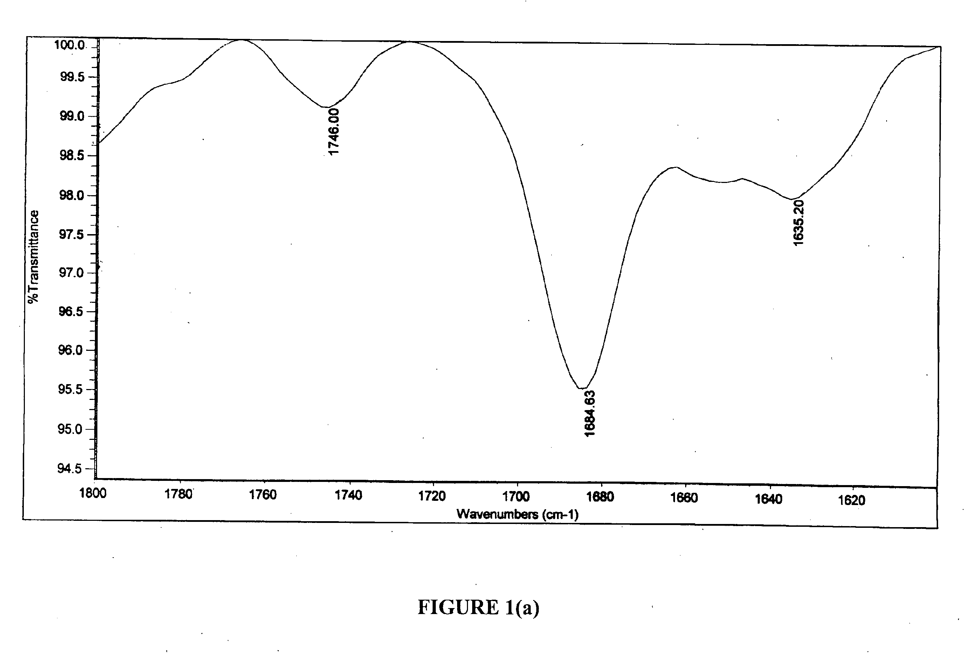

FIGURE 1 & 1A relates to comparative FTIR analysis of the plant nutrient obtained from the rice husk.
Figure 1 has peaks at 3420.40 cm⁻¹, 2926.51 cm⁻¹, 1684.55 cm⁻¹, 1527.91 cm⁻¹, 1090.93 cm⁻¹, 958.31 cm⁻¹ and 799.11 cm⁻¹.
Figure 1A has peaks at 1746.00 cm⁻¹, 1684.63 cm⁻¹ and 1635.20 cm⁻¹.

### SUMMARY OF THE PRESENT INVENTION

To meet the above objective and others present invention relates to a novel method of producing biosilica from rice agropolymers. The present invention relates to the production process of plant nutrient wherein the micronized plant material undergoes either alkali treatment, Hydrogen peroxide treatment or a combination of hydrogen peroxide alkaline treatment. The alkali solutions used to treat the micronized plant material also extracts silica present in rice husk. This invention has its application in the development of production of biosilica from rice agropolymers production process modification.

### DETAILED DESCRIPTION OF THE INVENTION

While the invention is susceptible to various modifications and alternative forms, specific aspects thereof has been shown by way of example in the illustrative examples and will be described in detail below. It should be understood, however that it is not intended to limit the invention to the particular forms disclosed, but on the contrary, the invention is to cover all modifications, equivalents, and alternative falling within the spirit and the scope of the invention as defined by the appended claims.

Before describing in detail embodiments it may be observed that the novelty and inventive step that are in accordance with the present invention resides in an efficient plant nutrient obtained from the rice husk without firing the husk, whereby the extract having rich content of dissolved silica in the range of 5 to 20 %. It is to be noted that a person skilled in the art can be motivated from the present invention and modify application of the said extract from crop to crop. However, such modification should be construed within the scope and spirit of the invention. Accordingly, the examples are showing only those specific details that are pertinent to understanding the aspects of the present invention so as not to obscure the disclosure with details that will be readily apparent to those of ordinary skill in the art having benefit of the description herein.

The terms "comprises", "comprising", or any other variations thereof, are intended to cover a non-exclusive inclusion, such that a setup, device that comprises a list of components does not include only those components but may include other components not expressly listed or inherent to such setup or device. In other words, one or more elements in a plant nutrient or method proceeded by "comprises... a" does not, without more constraints, preclude the existence of other elements or additional elements in the composition or method. The following paragraphs explain present invention with respect to an efficient plant nutrient comprising an extract of rice husk comprising silica 10 to 24 %, wherein the said extract with or without alkali solution is treated with metal silicate for utilization of seed or seedling treatment. The metal silicates are selected from the group of metal such as copper, zinc, iron, manganese, molybdenum, and mixture thereof.

Accordingly, the present invention relates to a plant nutrient comprising an extract of rice husk comprising silica 5 to 20 %.

Another aspect of the present invention, wherein a process for preparing a plant nutrient obtained from rice husk, comprising the steps of:
a. mixing rice husk and alkali solution in the proportion of 1:3 to 1:20 w/v along with water and heating the mixture for obtaining the solution of the same, and residue or the left over of the rice husk with low content of silica below 5 %
b. obtaining precipitate by acidifying the said mixture of step (a), filtering the same and obtaining the biosilica precipitate, and
c. the said biosilica of step (b) dissolved in alkali silicate like potassium silicate of 10 to 20 %, and using with or without other plant nutrients.

Yet another aspect of the present invention, wherein the extract obtained in step (b) is further dissolve in alkali solution for application as foliar nutrition.

Yet another aspect of the present invention, wherein the alkali solution is in the range of 5% to 25 %.

Yet another aspect of the present invention, wherein the mixture of step (a) is acidifying up to pH 2 adding acid such as HCI or H₂SO4

Yet another aspect of the present invention, wherein in step (b) thus obtained left over is treated with 5 to 25 % H2O2 for obtaining the agro polymer of rice husk having low content of silica below 5%..

Yet another aspect of the present invention, wherein the agro polymer of rice husk is further treated with metal silicate for obtaining the agro polymer embedded with rich content of silica in the range of 5 to 45 %.

The extract of the present invention may include tannins, humic acid, whole cell biomass, chitin and chitin derivatives, metallothioneins, microbial polysaccharides, melannins, polyphenolic biopigments, bacterial cell wall polymers, microbially produced chelating agents (siderophores), and the like. However, the above materials may be costly and often are not available in sufficient quantities.

The other aspect of the present invention is to provide biosilica from rice agropolymer production process modification. In a preferred embodiment, the alkali treatment with rice husk is affected with sodium hydroxide or potassium hydroxide or sodium carbonate or adding any alkali solution and /or adding hydrogen peroxide to the reaction mixture. Hydrogen peroxide (5-30% concentration treatment along with 1-10% w/w) resulted in rice agropolymer.

The rice husks were treated with higher concentration of alkali (11-20% w/w with or without hydrogen peroxide). The alkali solution (NaOh or Koh or sodium carbonate or any alkaline solutions.) removes more silica from rice husk. The resultant solution was acidified with acids such as HCl to precipitate silica.

As used herein, unless otherwise indicated, references to percentages are to percentages based the weight. Thus, in the plant nutrient of the invention, the amount of the silica is typically 5 to 20 wt% of the extract of rice husk.

As used herein, a percentage denoting the concentration of a solution is typically based on the mass of the solute compared to the mass of the solution.

In another embodiment, however, the said potassium silicate solution which can be used in step (c) of the process of the invention typically has a concentration of 10 to 20 % mass/volume (i.e 10 to 20 g solute per 100 mL of solution). In this embodiment, the said alkali solution which is preferably used to dissolve the extract obtained in step (b) of the present invention for application as foliar nutrition typically has a concentration of 5 to 25% m/v (i.e 5 to 25 g per 100 mL of solution). In this embodiment, the H2O2 which is preferably used to obtain an agro polymer from the residue obtained in step (a) typically has a concentration of 5 to 25 % m/v (i.e 5 to 25 g per 100 mL of solution).

In a further embodiment, the potassium silicate solution preferably used in step (c) of the process of the invention typically has a concentration of 10 to 20 % v/v (i.e. 10 to 20 mL solute per 100 mL of solution). In this embodiment, the alkali solution which is preferably used to dissolve the extract obtained in step (b) of the present invention for application as foliar nutrition typically has a concentration of 5 to 25% v/v (i.e. 5 to 25 mL solute per 100 mL of solution). In this embodiment, the H2O2 which is preferably used to obtain an agro polymer from the residue obtained in step (a) typically has a concentration of 5 to 25 % v/v (i.e. 5 to 25 mL solute per 100 mL of solution).

### Now the invention will be described in detail so as to illustrate and explain various salient features of the invention.

### Example 1

In this example, 1.0 Kg rice husk is treated with and 20 % KOH solution in along with 5-10 liters water and heating the mixture for obtaining the solution of the same, the solution was kept for 6 hrs with regular stirring / shaking in between and were subsequently filtered. After filtering the solution, obtaining the extract of rice husk, and residue or the left over of the rice husk extract. The extract of rice husk contains majority amount 5 to 20 % silica; this extract was acidified with HCI or H2SO4 to below 2PH to obtain precipitate rich in silica.[Biosilica], about 10 to 20 % dry weight of the material is obtained. Wherein biosilica derived from the said extract of rice husk is further dissolved in various concentrations with alkali and were used for foliar nutrition at various concentrations and at 2% foliar spray this product enhanced rice yields up to 15%.

### Example 2

wherein the said extract of rice husk is further dissolved in various concentration with alkali and were used for foliar nutrition at various concentrations with other nutrients such as urea and at 2-3 % foliar spray this product enhanced yields up to 25%, in the rice.

### Example 3

The left over of rice husk was treated with 5-20% H2O2 sequentially two to three or singly to obtain Agro polymer. Agro polymer obtained was again soaked in saturated potassium silicate after removal of H2O2 for twelve hours later acidified to obtain Agro polymer embedded with high content of silica.[5-45%]

### ADVANTAGES OF THE PRESENT INVENTION

The primary advantage of the present plant nutrient enhances the growth and yield of the crops.

Another advantage of the present plant nutrient with property of containing dissolved silica in the range of 5 to 25 %.

Yet another advantage of the present plant nutrient can be used with other conventional plant nutrient.

The inventors have been working to develop the invention, so that advantage can be achieved in an economical, practical, and facile manner. While preferred aspects and example configurations have been shown and described, it is to be understood that various further modifications and additional configurations will be apparent to those skilled in the art. It is intended that the specific embodiments and configurations herein disclosed are illustrative of the preferred nature of the invention, and should not be interpreted as limitations on the scope of the invention.

## Claims

1. A plant nutrient comprising an extract of rice husk comprising 5 to 20 % silica.

2. A process for preparing a plant nutrient obtained from rice husk, comprising the steps of:
a. mixing rice husk and alkali solution in the proportion of 1:3 to 1:20 w/v along with water and heating the mixture to obtain (i) a solution of rice husk extract, and (ii) a rice husk residue with a silica content below 5 %
b. acidifying the solution of rice husk extract of step (a), and filtering the same to obtain a biosilica precipitate, and
c. dissolving the said biosilica of step (b) in alkali silicate, preferably potassium silicate of 10 to 20 %, to obtain a plant nutrient suitable for use with or without other plant nutrients.

3. The process as claimed in claim 2, wherein the extract obtained in step (b) is further dissolved in alkali solution for application as foliar nutrition.

4. The process as claimed in claim 3, wherein the alkali solution is in the range of 5% to 25 %.

5. The process as claimed in claim 2, wherein in step (b) the mixture of step (a) is acidified up to pH 2 adding acid such as HCI or H2SO4

6. The process as claimed in claim 2, wherein the residue obtained in step (a) is treated with 5 to 25 % H2O2 to obtain an agro polymer of rice husk having a silica content below 5%.

7. The process as claimed in claim 6, wherein the agro polymer of rice husk is further treated with metal silicate to obtaining an agro polymer with a silica content in the range of 5 to 45 %.

8. Use of the plant nutrient of claim 1, or a plant nutrient obtainable by the process of any one of claims 2 to 7, in the treatment of a plant.

9. A process of cultivating a plant at a locus which process comprises application to the said locus of the plant nutrient of claim 1, or a plant nutrient obtainable by the process of any one of claims 2 to 7.
